# EUROPÄISCHE PATENTSCHRIFT

(11) **EP 2 884 062 B1**
(45) Veröffentlichungstag und Bekanntmachung des Hinweises auf die Patenterteilung: **29.03.2017**
(21) Anmeldenummer: 14183675.9
(22) Anmeldetag: 05.09.2014
(51) Int. Cl.: F01L 13/00

(54) **Vorrichtung zur Nockenwellenverstellung einer Brennkraftmaschine**
Device for adjusting the camshaft of a combustion engine
Dispositif de décalage d'arbre à cames d'un moteur à combustion interne

(30) Priorität: 21.10.2013 DE 102013221244
(43) Veröffentlichungstag der Anmeldung: 17.06.2015
(73) Patentinhaber: Volkswagen Aktiengesellschaft, 38440 Wolfsburg (DE)
(72) Erfinder: Wawrik, Norman, 06925 Annaburg (DE); Hartel, Kai, 31275 Lehrte (DE); Gehl, Oswald, 38239 Salzgitter (DE); Schultze, Tonio-Erik, 38302 Wolfenbüttel (DE); Grühl, Dennis, 29392 Wesendorf (DE); Bodeutsch, Dirk, 39924 Meßdorf (DE)

(56) Entgegenhaltungen:
- DE-A1-102007 010 148
- DE-A1-102007 010 149
- DE-A1-102007 037 232
- DE-A1-102008 060 166
- DE-A1-102008 064 340
- DE-A1-102009 007 819
- DE-A1-102009 009 080

## Beschreibung

Die Erfindung betrifft eine Vorrichtung zur Nockenwellenverstellung einer Brennkraftmaschine mit einer Nockenwelle mit mindestens einem drehfest daran angeordneten Nockenstück und einer Axialkulisse mit zwei Kulissenbahnen. Die Kulissenbahnen sind in eine Umfangsfläche der Nockenwelle eingebrachte Steuernuten, die in einem gemeinsamen Bahnabschnitt in Abmessung und Verlauf zusammenfallen, wobei der gemeinsame Bahnabschnitt an einer Verzweigungsstelle in zwei axial nebeneinander verlaufende Einkoppelabschnitte übergeht. Ferner weist die Vorrichtung mindestens ein radial zur Nockenwelle in die Axialkulisse einkoppelbares Betätigungselement zum Verschieben des Nockenstücks in axialer Richtung auf. Die Verzweigungsstelle ist derart eingerichtet, dass das ausgehend von einem der Einkoppelabschnitte in Richtung auf die Verzweigungsstelle in einer der Kulissenbahnen geführte Betätigungselement in den gemeinsamen Bahnabschnitt einläuft.

Aus der DE 10 2007 010 148 A1 ist ein Ventiltrieb einer Brennkraftmaschine bekannt, der die Möglichkeit bietet, den Hub der Einlass- und Auslassventile der Brennkraftmaschine in Stufen zu verstellen. Diese Vorrichtung zur Nockenverstellung umfasst ein Nockenstück als Teil der Nockenwelle, das drehfest, jedoch in axialer Richtung verschiebbar auf einer Trägerwelle der Nockenwelle angeordnet ist. Das Nockenstück weist zwei Nockengruppen mit jeweils zwei in axialer Richtung nebeneinander angeordneten Nocken mit unterschiedlichen Nockenformen auf.

Die Vorrichtung ermöglicht eine Verstellung des Hubs der diesen Nockengruppen zugeordneten Ventile dadurch, dass das Nockenstück in eine definierte Axialposition verschoben wird, wodurch ein Kontaktelement eines Schlepphebels, mit dem die Ventile betätigt werden, entweder mit einem der beiden Nocken oder mit einem "Nullnocken" in Kontakt gebracht wird, der in Form eines Abschnitts des Nockenstücks ohne Nockenerhebung gebildet ist. Bei einem Kontakt des Schlepphebels mit einem der beiden Nocken wird das jeweilige Ventil mit einem von der jeweiligen Nockenerhebung definierten und zusätzlich von dem Übersetzungsverhältnis des Schlepphebels abhängigen Hub betätigt. Bei einem Kontakt des Schlepphebels mit dem "Nullnocken" ist der Hub des Ventils entsprechend der fehlenden Nockenerhebung gleich Null. Über den "Nullnocken" wird demnach eine Ventilabschaltung realisiert.

Eine Verstellung der einzelnen Nockenstücke in axialer Richtung der Nockenwelle erfolgt mit Hilfe jeweils einer Axialkulisse, die ein integraler Bestandteil des Nockenstücks ist. In die Axialkulisse sind zwei Kulissenbahnen in Form von in Umfangsrichtung in einer Y-Form verlaufenden Steuernuten integriert. Eine der Kulissenbahnen dient der Vorwärtsverschiebung des Nockenstücks in Axialrichtung und die andere der Kulissenbahnen dient der Rückwärtsverschiebung des Nockenstücks in Axialrichtung. Zu diesem Zweck weisen die beiden Kulissenbahnen einen in Umfangsrichtung verlaufenden, gemeinsamen Bahnabschnitt auf, der ein Teil beider Kulissenbahnen ist, so dass die beiden Kulissenbahnen in diesem Abschnitt in Verlauf und Form zusammenfallen. Ferner weisen die beiden Steuernuten in einem weiteren Abschnitt zwei divergierend verlaufende Teilnuten auf, die die Einkoppelabschnitte der beiden Kulissenbahnen zum Einkoppeln eines Betätigungselements bilden und die sich an einem Verzweigungspunkt zu dem gemeinsamen Bahnabschnitt vereinigen. Die Verstellung wird über eine Stellvorrichtung erreicht, die ausfahrbare Betätigungselemente in Form von Verstellstiften aufweist, von denen jeweils einer in Abhängigkeit von der jeweiligen Position des Nockenstücks auf der Trägerwelle und von der gewünschten Verstellungsrichtung (vorwärts oder rückwärts) ausgefahren wird und in einen der Einkoppelabschnitte eingreift. Dies führt infolge der Relativdrehung der Axialkulisse zu dem Stift zu einer Axialverschiebung des Nockenstücks auf der Trägerwelle.

Die Verzweigungsstelle ist also derart eingerichtet, dass das ausgehend von einem der Einkoppelabschnitte bei Drehung der Axialkulisse in Richtung auf die Verzweigungsstelle in einer der Kulissenbahnen geführtem Betätigungselement in den gemeinsamen Bahnabschnitt einläuft.

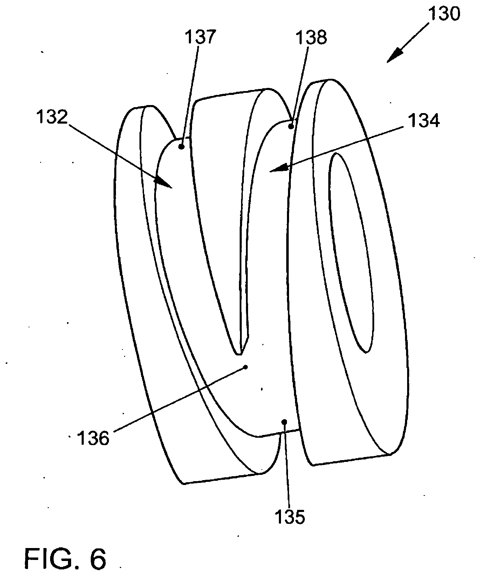

Eine herkömmliche Axialkulisse 130 ist in Figur 6 gezeigt. Die Axialkulisse 130 ist ein im Wesentlichen ringförmiges Kulissenrad und weist in ihrer Umfangsfläche zwei Kulissenbahnen 132 und 134 in Form von Steuernuten auf. Die Kulissenbahnen 132 und 134 weisen einen gemeinsamen Bahnabschnitt 135 und zwei divergiert verlaufende Eingriffsabschnitte 137, 138 jeweils einer der Kulissenbahnen auf. An einer etwa Y-förmigen Verzweigungsstelle 136 laufen die beiden Eingriffsabschnitte 137 und 138 zu dem gemeinsamen Abschnitt zusammen. Ein bei Drehung der Axialkulisse in Pfeilrichtung in einem der Eingriffsabschnitte 137 geführtes Betätigungselement wird aufgrund des stumpfen Winkels zwischen dem Eingriffsabschnitt 137 und dem gemeinsamen Bahnabschnitt an der Verzweigungsstelle von annähernd 180° sanft in den gemeinsamen Bahnabschnitt 135 eingeführt, wodurch sich aufgrund des axialen Versatzes zwischen dem gemeinsamen Bahnabschnitt 135 und dem Eingriffsabschnitt 137 eine axiale Verschiebung des mit der Axialkulisse verbundenen Nockenstücks ergibt.

Es hat sich allerdings herausgestellt, dass es bei Verwendung der oben beschriebenen Vorrichtungen zur Nockenwellenverstellung zu Beschädigungen des Betätigungselements kommen kann.

Eine alternative Vorrichtung zur Nockenwellenverstellung ist in der Druckschrift DE 10 2007 037 232 A1 beschrieben. Die Axialkulisse dieser Vorrichtung weist eine erste Steuernut mit einer ersten Tiefe und eine zweite Steuernut mit einer zweiten Tiefe auf, die größer ist als die erste radiale Tiefe. Mit anderen Worten gibt es bei dieser Axialkulisse keinen gemeinsamen Bahnabschnitt beider Kulissenbahnen. Diese Anordnung hat den Vorteil, dass eine Axialverschiebung des Nockenstücks mithilfe zweier Betätigungselemente, nämlich eines Innenstößels, der in die zweite Kulissenbahn passt, und eines diesen umgebenden, hülsenförmigen Außenstößels, der in die erste Kulissenbahn passt, durchführbar ist. Hierdurch kann Bauraum in axialer Richtung eingespart werden. Allerdings ist diese Axialkulisse komplex in der Herstellung und anfällig für Beschädigungen.

Eine weitere Vorrichtung zur Nockenwellenverstellung ist in der Druckschrift DE 10 2009 009 080 A1 beschrieben. Hierbei sind die beiden Kulissenbahnen in Umfangsrichtung hintereinander angeordnet, so dass nur ein einziges Betätigungselement erforderlich ist. Aufgrund der fehlenden Y-Geometrie der beiden Kulissenbahnen benötigt diese Vorrichtung allerdings einen größeren Bauraum.

Die DE 10 2008 606 166 A1 offenbart einen Ventiltrieb für Gaswechselventile einer Brennkraftmaschine. Bei diesem sind zwei Eingriffselemente jeweils in Wirkverbindung mit einer rechtsgängigen Nut oder einer linksgängigen Nut mit anschließender Auslaufnut bei einem Schneckentrieb bringbar, um so einen auf einer Nockenwelle drehfest und axial verschiebbar geführten Nockenträger axial zu verschieben. Während das eine Eingriffselement mit der Nut und der Auslaufnut zusammenwirkt, wirkt das andere Eingriffselement mit der Auslaufnut und einer Steuerrampe der Auslaufnut zusammen. Beide Eingriffselemente sind aus deren Ausgangsstellung über ein gemeinsames Steuermittel lösbar und werden durch Mittel aus deren Ausgangsstellung in Richtung der Nuten bewegt. Das Verschieben des Nockenträgers erfolgt nur mittels eines Eingriffselementes, während das andere Eingriffselement beim Drehen des die Nuten aufweisenden Schneckentriebes unmittelbar in seine festgelegte Ausgangsstellung zurückbewegt wird. Das andere Eingriffselement wird nach Durchlaufen der Auslaufnut gleichfalls durch Einwirken der Steuerrampe in die festgelegte Ausgangsstellung zurückbewegt. Bei minimalem baulichen und Steuerungsaufwand ist so ein Verschieben des Nockenträgers, der unterschiedliche Nocken aufweist, mit denen ein verändertes Arbeitsspiel beeinflusst werden kann, möglich.

Die DE 10 2007 010149 A1 offenbart einen Ventiltrieb für Gaswechselventile einer Brennkraftmaschine mit mindestens einer Nockenwelle, die in einem Gehäuse der Brennkraftmaschine drehbar gelagert ist, mindestens einem drehfest und axial verschiebbar auf der Nockenwelle geführten Nockenträger, sowie Einrichtungen zum axialen Verschieben des mindestens einen Nockenträgers auf der Nockenwelle in entgegengesetzten Richtungen, umfassend mindestens zwei Eingriffselemente, die sich mit einer rechtsgängigen bzw. linksgängigen Nut in Eingriff bringen lassen. Um eine Verkleinerung des axialen Bauraums und der Anzahl der zu montierenden Teile zu ermöglichen sind die rechtsgängige Nut und die linksgängige Nut unmittelbar nebeneinander angeordnet sind und ineinander übergehen bzw. sich vereinigen.

Die DE 10 2007 010 148 A1 offenbart einen Ventiltrieb für Gaswechselventile einer Brennkraftmaschine mit einer Nockenwelle, die in einem Gehäuse der Brennkraftmaschine drehbar gelagert ist, mindestens einem drehfest und axial verschiebbar auf der Nockenwelle geführten Nockenträger, sowie einem Lager zur drehbaren Lagerung des Nockenträgers. Damit sich insbesondere bei einem zwischen zwei Gaswechselventilen angeordneten Lager der Verschiebeweg des Nockenträgers ohne Probleme hinsichtlich der axialen Dimensionierung des Lagers vergrößern lässt, wird erfindungsgemäß vorgeschlagen, dass das Lager in Bezug zum Gehäuse der Brennkraftmaschine in axialer Richtung der Nockenwelle verschiebbar ist.

Die DE 10 2009 007 819 A1 offenbart eine Ventiltrieb einer Brennkraftmaschine mit einer Nockenwelle, die eine Trägerwelle sowie ein darauf drehfest und axialverschiebbar angeordnetes Nockenstück umfasst, das benachbarte Nocken unterschiedlicher Nockenerhebungen und eine als Nut ausgebildete Axialkulisse mit äußeren Nutwänden zur Vorgabe zweier sich kreuzender Kulissenbahnen aufweist, und mit einem Betätigungsstift zum Verschieben des Nockenstücks in Richtung beider Kulissenbahnen, wobei das Nockenstück mit einer Leiteinrichtung versehen ist, die zwei gegensinnig drehende Leitflügel zur Bildung relativ zu den äußeren Nutwänden axialbeweglicher innerer Nutwände aufweist und nach Art einer Weiche im Kreuzungsbereich der Kulissenbahnen zwischen diesen umschaltet, so dass für den Betätigungsstift lediglich eine der Kulissenbahnen freigegeben ist. Dabei soll die Leiteinrichtung ein die Drehbewegung der Leitflügel synchronisierendes Lenkgestänge aufweisen.

Die DE 10 2008 064 340 A1 offenbart einen Ventiltrieb für Gaswechselventile einer Brennkraftmaschine mit einer Grundnockenwelle und mehreren auf der Grundnockenwelle axial verschiebbaren und radial geführten Nockenträgern, wobei die Grundnockenwelle für jeden Nockenträger mindestens einen Außenverzahnungsabschnitt und jeder Nockenträger mindestens einen Innenverzahnungsabschnitt aufweist, der mit dem Außenverzahnungsabschnitt der Grundnockenwelle im Zahneingriff steht, und wobei die Grundnockenwelle zwischen benachbarten Außenverzahnungsabschnitten zylindrische Wellenabschnitte aufweist. Um die Fertigung der Grundnockenwelle zu erleichtern ist jeder Nockenträger auf mindestens einem der zylindrischen Wellenabschnitte radial geführt.

In Anbetracht der beschriebenen Probleme ist es die Aufgabe der vorliegenden Erfindung, eine Vorrichtung zur Nockenwellenverstellung bereitzustellen, die zuverlässig arbeitet und besonders haltbar ist.

Diese Aufgabe wird erfindungsgemäß durch eine Weiterbildung der bekannten Vorrichtungen zur Nockenwellenverstellung gelöst, die im Wesentlichen dadurch gekennzeichnet ist, dass die Verzweigungsstelle derart eingerichtet ist, dass das ausgehend von dem gemeinsamen Bahnabschnitt in Richtung auf den Verzeigungspunkt geführte Betätigungselement in einen Ausweichweg einläuft, der in Umfangsrichtung eine Fortsetzung des gemeinsamen Bahnabschnitts über die Verzweigungsstelle hinaus bildet. Vorteilhafte Ausgestaltungen der erfindungsgemäßen Vorrichtung sind Gegenstand der abhängigen Patentansprüche und ergeben sich aus der nachfolgenden Beschreibung der Erfindung.

Die Erfindung geht auf die Erkenntnis zurück, dass die eingangs beschriebenen Beschädigungen des Betätigungselements insbesondere darauf zurückzuführen sind, dass es unter bestimmten Rahmenbedingungen zu einer Rückdrehung der Nockenwelle entgegen der vorgesehenen Drehrichtung kommen kann. Falls sich zum Zeitpunkt einer solchen Rückdrehung das Betätigungselement gerade in dem gemeinsamen Bahnabschnitt befindet, durchläuft es die Kulissenbahnen in Gegenrichtung und prallt an der Verzweigungsstelle frontal gegen die zwischen den beiden Eingriffsabschnitten angeordnete Wand der Steuernut. Im Falle einer Y-förmigen Verzweigungsstelle mit jeweils stumpfem Winkel zwischen dem gemeinsamen Bahnabschnitt und den beiden Eingriffsabschnitten prallt das Betätigungselement genau auf die an dieser Stelle spitz zulaufende Frontwand, was zu einer harten Kollision zwischen Betätigungselement und der Spitze und zu Beschädigungen des Betätigungselements wie etwa einem Verbiegen oder Bruch führt.

Bspw. kann sich eine Rückdrehung der Nockenwelle bei eingekoppeltem Betätigungselement dann ergeben, wenn bei konstanter Fahrt im 1. Gang im Halbmotorbetrieb durch plötzliche Vollbremsung ohne Treten der Kupplung das Fahrzeug abgewürgt wird. In diesem Fall erteilt das Motorsteuergerät nach Unterschreiten einer unteren Drehzahlschwelle den Befehl zum Umschalten in den Vollmotorbetrieb, und das Betätigungselement wird zur Nockenwellenverstellung ausgefahren. Dabei ist es jedoch nicht sichergestellt, dass die erforderliche Anzahl an Nockenwellenumdrehungen zum Zurückschalten in den Vollmotorbetrieb ausgeführt wird. Deshalb kann es bei Rückdrehen des Motors bis zum Stillstand (Entspannung der Elastizitäten in Steuertrieb, Kurbeltrieb und Zweimassenschwungrad) durch Kollision des Betätigungselements mit der "Y"-Spitze zu beschädigten, verdrehten oder verbogenen Schaltkulissen kommen. Ferner können die Betätigungselemente bei einer Kollision verbogen werden oder abbrechen, insbesondere wenn sie in Form von Verstellstiften ausgeführt sind.

Erfindungsgemäß wird die scharfe "Y"- Spitze an der Verzweigungsstelle durch einen Ausweichweg ersetzt, in den das ausgehend von dem gemeinsamen Bahnabschnitt in Gegenrichtung geführte Betätigungselement eingeleitet wird. Der Ausweichweg verläuft ausgehend von der Verzweigungsstelle anfangs in einer Richtung, die derjenigen Richtung entspricht, in der der gemeinsame Abschnitt in die Verzweigungsstelle einläuft. Mit anderen Worten bildet der Ausweichweg eine Fortsetzung des gemeinsamen Bahnabschnitts über die Verzweigungsstelle hinaus. Im weiteren Verlauf kann der Ausweichweg durchaus seine Richtung ändern, sofern das Betätigungselement sanft und hindemisfrei in diese Richtung umgeleitet wird.

Der Ausweichweg ist dabei so gestaltet, dass das in den Ausweichweg einlaufende Betätigungselement nicht abrupt auf ein Hindernis trifft, sondern allenfalls sanft umgelenkt wird (in axialer oder in radialer Richtung). Zu diesem Zweck erstreckt sich der Ausweichweg in Umfangsrichtung über eine Abmessung von vorzugsweise mehr als 1 cm, besonders bevorzugt mehr als 2 cm, aber bevorzugt weniger als 10 cm. Bei üblicherweise verwendeten Außendurchmessern von Axialkulissen erstreckt sich der Ausweichweg in Umfangsrichtung über einen Winkel von vorzugsweise mehr als 5°, besonders bevorzugt mehr als 10°, insbesondere 20° oder mehr.

Bei einer bevorzugten Ausführungsform der Erfindung laufen die beiden Einkoppelabschnitte und der gemeinsame Bahnabschnitt an der Verzweigungsstelle Y-förmig zusammen, wobei die beiden Einkoppelabschnitte gegenseitig einen spitzen Winkel einschließen, bevorzugt einen Winkel von weniger als 20°, besonders bevorzugt weniger als 10°, insbesondere 5° oder weniger. Bei derart gestalteten Y-förmigen Verzweigungsstellen wirkt sich ein Ausweichweg besonders positiv aus, da eine harte Kollision mit der "Y"-Spitze vermieden wird.

Der Ausweichweg kann dabei zwischen den beiden Einkoppelabschnitten verlaufen, da üblicherweise die Fortsetzung der Richtung des gemeinsamen Bahnabschnitts in Umfangsrichtung zwischen den beiden Einkoppelabschnitten verläuft. Somit ist keine starke Umlenkung des Betätigungselements im Verlauf des Ausweichwegs erforderlich.

In einer besonders bevorzugten Ausführungsform ist der Ausweichweg in Form einer Rampe gebildet, die eine sich ausgehend von der Verzweigungsstelle allmählich verringernde Nuttiefe aufweist. Mit anderen Worten wird das entgegen der vorgesehenen Richtung in die Verzweigungsstelle einlaufende Betätigungselement allmählich aus der Steuernut herausgeführt, ohne mit einer Nutwand zu kollidieren. Der gesamte Bereich zwischen den beiden Eingriffsabschnitten kann dabei ausgehend von der Verzweigungsstelle als Rampe ausgebildet sein, damit eine Kollision zuverlässig vermieden wird.

Es hat sich dabei als zweckmäßig erwiesen, dass die Steigung der Rampe derart eingerichtet ist, dass das über die Rampe geführte Betätigungselement bei Betrieb des Motors in radialer Richtung aus der Axialkulisse ausgeworfen wird. Mit anderen Worten ist der Ausweichweg ähnlich wie üblicherweise das entgegengesetzte Ende des gemeinsamen Bahnabschnitts als Auswurfsrampe ausgestaltet, die das Betätigungselement zurück in den zugehörigen Nockensteller wirft. Dadurch wird das Problem eines in "verkehrter" Richtung in der Axialkulisse umlaufenden Betätigungselements besonders elegant gelöst. Die Steigung der Rampe gegenüber einer an der Verzweigungsstelle an den Nutgrund angelegten Tangentialebene beträgt vorzugsweise mehr als 10° und weniger als 30°, insbesondere etwa 20°. Dieser Steigungswert führt besonders zuverlässig zu einem Rückwurf des Betätigungselements in den zugehörigen Nockensteller, während gleichzeitig eine allzu große Reibung zwischen Betätigungselement und Rampe vermieden wird.

Vorzugsweise liegt die Mitte zumindest des ersten Abschnitts des Ausweichwegs in derselben Radialebene wie die Mitte des gemeinsamen Bahnabschnitts. Auf diese Weise in ein reibungsloses Einlaufen des Betätigungselements in den Ausweichweg gewährleistet. Als besonders vorteilhaft hat es sich herausgestellt, dass die beiden Kulissenbahnen im Wesentlichen symmetrisch um eine Radialebene als Spiegelebene verlaufen. Dies gewährleistet dieselbe Beanspruchung von Axialkulisse und Betätigungselement bei Verstellung des Nockenstücks in Vorwärts- und in Rückwärtsrichtung, wodurch die Haltbarkeit der Vorrichtung erhöht wird.

Bei einer alternativen Ausführungsform der Erfindung ist die Verzweigungsstelle derart ausgestaltet, dass der Ausweichweg in einen der Eingriffsabschnitte einmündet. Das in "verkehrter" Richtung in den Kulissenbahnen umlaufende Betätigungselement prallt bei dieser Ausführungsform nicht gegen eine spitze "Y"- Kontur, sondern wird sanft in einen der Eingriffsabschnitte zurückgeführt.

Diese sanfte Rückführung kann bspw. durch eine feder- oder trägheitsgesteuerte Weiche ausgeführt werden, die das Betätigungselement in eine durch die Konstruktion vorher festgelegte Präferenznut zurückspuren lässt.

Alternativ oder zusätzlich kann das Einlaufen des Betätigungselements in einen der beiden Eingriffsabschnitte dadurch erreicht werden, dass das in den Ausweichweg einlaufende Betätigungselement unter einem Einfallswinkel von mehr als 70°, insbesondere mehr als 80° und weniger als 88° auf einen Wandabschnitt der Führungsnut trifft und dadurch in einen der Eingriffsabschnitte eingeschert wird. Als Einfallswinkel wird der Winkel zwischen der Bewegungsbahn des Betätigungselements und der Normalen auf die Aufprallfläche des Wandabschnitts verstanden. Wenn dieser Winkel annähernd 90° beträgt, wird das im Ausweichweg geführte Betätigungselement sanft in Richtung auf einen der Eingriffsabschnitte umgelenkt.

In diesem Fall sind die beiden Einkoppelabschnitte vorzugsweise derart asymmetrisch geformt, dass eine durch die axiale Mitte des gemeinsamen Bahnabschnitts verlaufende Radialebene die Seitenwand genau eines Einkoppelabschnitts schneidet. In diesen Einkoppelabschnitt läuft das Betätigungselement über den Ausweichweg ein und trifft dort an dem Schnittpunkt auf die Seitenwand auf. Es folgt eine Umlenkung des Betätigungselements in Richtung auf den weiteren Verlauf des Einkoppelabschnitts.

Die asymmetrische Gestaltung der Verzweigungsstelle wird auf konstruktiv einfache Weise dadurch erreicht, dass sich einer der Einkoppelabschnitte zu der Verzweigungsstelle hin verbreitert, während der andere Einkoppelabschnitt vorzugsweise in seiner axialen Abmessung konstant bleibt. In diesem Fall läuft das Betätigungselement in die sich verbreiternde Mündung des ersten Einkoppelabschnitts ein, die den Ausweichweg bildet.

An dem der Verzweigungsstelle entgegengesetzten Ende des Einkoppelabschnitts kann eine Rampe, insbesondere eine Auswerframpe vorgesehen sein.

Das Nockenstück kann mindestens eine Nockengruppe mit mindestens zwei in axialer Richtung nebeneinander angeordneten Nocken aufweisen. Als "Nocken" einer erfindungsgemäßen Nockenwelle wird erfindungsgemäß auch ein "Nullnocken" verstanden, der keine Nockenerhebung aufweist und über den somit ein Nullhub des damit angesteuerten Ventils der Brennkraftmaschine erzielt wird. Um eine gleichzeitige Verstellung von zwei und mehr Ventilen eines Zylinders der Brennkraftmaschine zu ermöglichen, kann (jedes) der Nockenstücke der erfindungsgemäßen Nockenwelle mehrere und vorzugsweise zwei Nockengruppen aufweisen, die beidseitig eines Lagerrings angeordnet sein können.

Das Betätigungselement kann in Form eines in radialer Richtung verstellbaren Verstellstifts oder Verstellpins gebildet sein, dessen Durchmesser vorzugsweise an die Breite der beiden Führungsnuten bzw. an die beiden Kulissenbahnen angepasst ist.

In einer besonders bevorzugten Ausführungsform der Erfindung sind zwei im Wesentlichen gleich geformte Betätigungselemente vorgesehen, von denen das erste zur axialen Verschiebung des Nockenstücks in Vorwärtsrichtung durch Eingriff in einen der Einkoppelabschnitte eingerichtet ist und von denen das andere zur axialen Verschiebung des Nockenstücks in Rückwärtsrichtung durch Eingriff in den anderen der Einkoppelabschnitte eingerichtet ist. Das Nockenstück kann auf einer strukturell von dem Nockenstück getrennten Trägerwelle axial verschiebbar gelagert sein.

Die Erfindung betrifft ferner eine Brennkraftmaschine mit einer erfindungsgemäßen Vorrichtung zur Nockenwellenverstellung. Die Brennkraftmaschine kann ein beliebiges Motoraggregat mit Ventilumschaltsystem sein, wie es in verschiedenen Arbeits- und Fortbewegungsmaschinen eingesetzt wird. Vorzugsweise ist die Brennkraftmaschine ein Verbrennungsmotor eines Kraftfahrzeugs.

Ferner betrifft die Erfindung eine Axialkulisse einer erfindungsgemäßen Vorrichtung zur Nockenwellenverstellung.

Die Erfindung wird nachfolgend anhand von zwei in den Zeichnungen dargestellten Ausführungsbeispielen näher erläutert. In den Zeichnungen zeigt
- Fig. 1:: eine perspektivische Ansicht einer Axialkulisse einer ersten Ausführungsform der Erfindung in Form eines Kulissenrads,
- Fig. 2:: verschiedene Ansichten des in Fig. 1 dargestellten Kulissenrads,
- Fig. 3:: eine Seitenansicht einer Nockenwelle mit dem Kulissenrad aus Fig. 1,
- Fig. 4:: eine perspektivische Ansicht (Fig. 4a) und eine Seitenansicht (Fig. 4b) einer Axialkulisse einer zweiten Ausführungsform der Erfindung in Form eines Kulissenrads,
- Fig. 5:: eine Vorrichtung zur Nockenwellenverstellung in zwei schematischen Seitenansichten, die den Vorgang einer axialen Verschiebung eines Nockenstücks veranschaulichen, und
- Fig. 6:: eine perspektivische Ansicht einer Axialkulisse in Form eines Kulissenrads aus dem Stand der Technik.

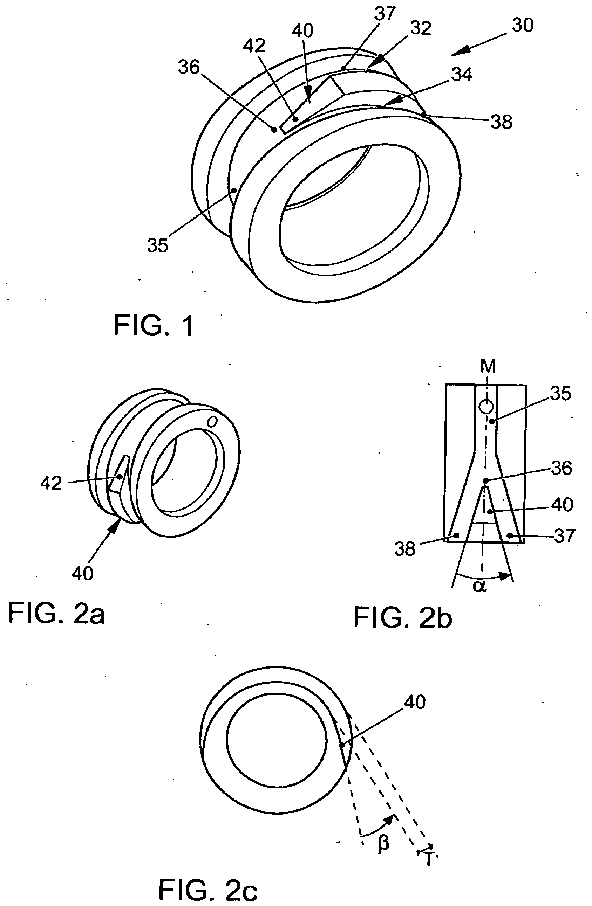

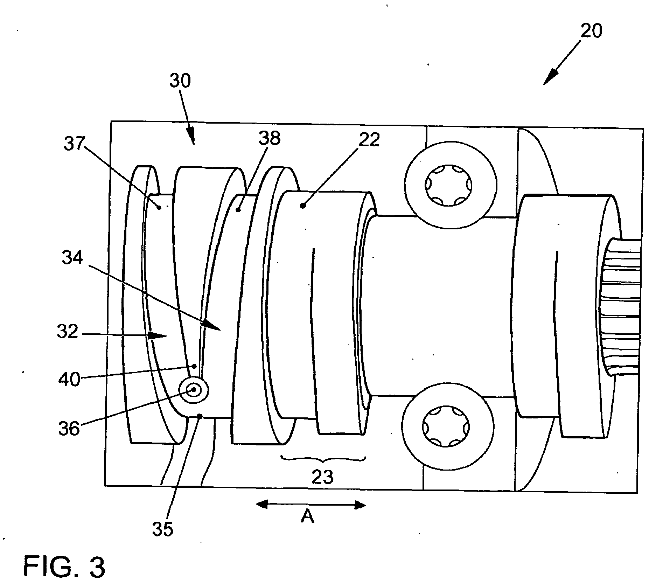

Fig. 1 zeigt eine erfindungsgemäße Axialkulisse 30 in Form eines Kulissenrads, das zur Bildung einer erfindungsgemäßen Vorrichtung 10 drehfest an einer Trägerwelle zur Bildung einer Nockenwelle 20 angebracht wird, wie es in Fig. 3 dargestellt ist. Die Axialkulisse 30 weist zwei in eine im Wesentlichen zylindrische Umfangsfläche eingebrachte Kulissenbahnen 32 und 34 auf. Die Kulissenbahnen 32 und 34 sind in Form von Steuernuten ausgebildet, die vertieft in einer Y-Form in die Umfangsfläche des Kulissenrads eingebracht sind. Die Kulissenbahnen 32, 34 weisen nämlich jeweils einen Eingriffsabschnitt 37 und 38 auf, wobei die beiden Eingriffsabschnitte 37, 38 an einer Verzweigungsstelle 36 in einen gemeinsamen Bahnabschnitt 35 der beiden Kulissenbahnen zusammengeführt werden. Die beiden Eingriffsabschnitte verlaufen axial versetzt nebeneinander, und der gemeinsame Abschnitt 35 verläuft axial und in Umfangsrichtung versetzt zu den beiden Eingriffsabschnitten. Der Abstand der durch die Mitte des gemeinsamen Abschnitt verlaufenden Radialebene von einer durch einen der Eingriffsabschnitte in einem von der Verzweigungsstelle entfernten Eingreifbereich verlaufenden Radialebene entspricht im Wesentlichen dem axialen Abstand zweier nebeneinander an der Nockenwelle angeordneten Nocken einer Nockengruppe 23.

Die Tiefe der beiden Steuernuten ist über die gesamte Erstreckung der Kulissenbahnen im Wesentlichen gleich. Am Ende des gemeinsamen Bahnabschnitts kann allerdings ein rampenförmiger Auswerfabschnitt vorgesehen sein, in dem sich die Nuttiefe allmählich verringert. Beide Kulissenbahnen sind in ihrer Form, insbesondere in der Breite und Tiefe der jeweiligen Steuernut, im Wesentlichen identisch. Dies hat den Vorteil, dass die Betätigungselemente 50 zum radialen Eingriff in die beiden Kulissenbahnen ebenfalls im Wesentlichen identisch geformt sein können.

Wenn ein Betätigungselement 50 in Form eines ersten Verstellstifts 52 in den Eingriffsabschnitt 37, der der ersten Kulissenbahn 32 zugeordnet ist, eingreift und sich die axial verschiebbar gelagerte Axialkulisse 30 in Umfangsrichtung gleichzeitig dreht, wird der erste Verstellstift 52 in Richtung auf die Verzweigungsstelle 36 geführt und schert in den gemeinsamen Bahnabschnitt 35 ein. Gleichzeitig wird die Axialkulisse aufgrund des axialen Versatzes zwischen dem Eingriffsabschnitt 37 und dem gemeinsamen Bahnabschnitt 35 in axialer Richtung verschoben, was zu einer axialen Verschiebung des die Nocken tragenden Nockenstücks 22 führt.

Für eine Rückverschiebung der Axialkulisse 30 wird ein anderes Betätigungselement 50 in Form eines zweiten Verstellstifts 54 in den zweiten Eingriffsabschnitt 38 eingekoppelt, der der zweiten Kulissenbahn 34 zugeordnet ist. Eine Verdrehung der Axialkulisse 30 führt dazu, dass der zweite Verstellstift 54 in Richtung auf die Verzweigungsstelle 36 geführt wird und in den gemeinsamen Bahnabschnitt 35 einschert. Aufgrund des axialen Versatzes zwischen dem Eingriffsabschnitt 38 und dem gemeinsamen Bahnabschnitt 35 wird die Axialkulisse 30 in Axialrichtung zurückgeschoben.

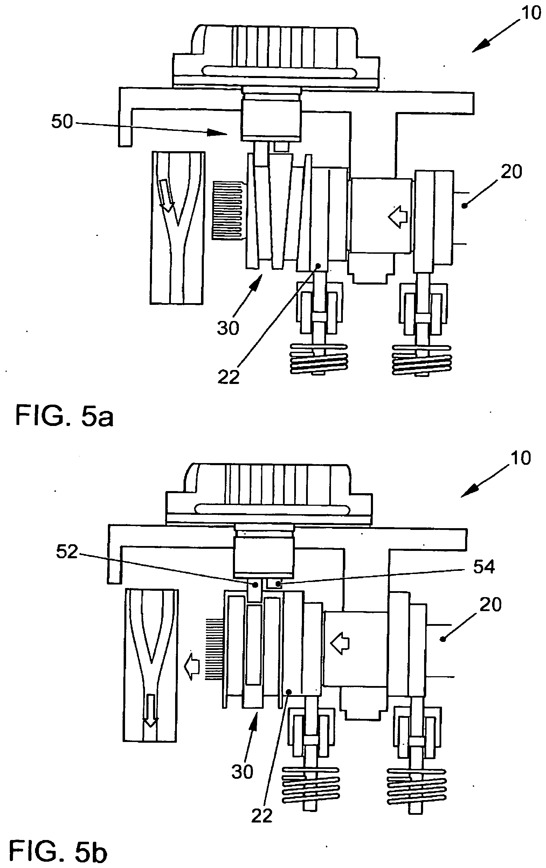

Diese Funktionsweise der Nockenverstellung ist in den Figuren 5a und 5b schematisch dargestellt: In Fig. 5a greift der erste Verstellstift 52 in einen Eingreifbereich des ersten Eingriffsabschnitts 37 ein. Durch die Drehung der Nockenwelle wird der Verstellstift 52 in Richtung auf die Verzweigungsstelle 36 geführt und die Axialkulisse gleichzeitig axial verschoben. In Fig. 5b ist der Verschiebevorgang abgeschlossen.

Für den Fall einer Rückdrehung des Nockenwelle bei ausgefahrenem Betätigungselement 50, das in den gemeinsamen Bahnabschnitt 35 eingekoppelt ist, ist ein Ausweichweg 40 vorgesehen, der ausgehend von der Verzweigungsstelle eine Fortsetzung des gemeinsamen Bahnabschnitts bildet. Mit anderen Worten verläuft zumindest der erste Teil des Ausweichwegs 40 im Wesentlichen in derselben Richtung wie der letzte Teil des gemeinsamen Bahnabschnitts 35 vor der Verzweigungsstelle 35.

In der in den Figuren 1 und 2 dargestellten Ausführungsform der Erfindung ist der Ausweichweg in Form einer Auswurfsrampe 42 gebildet, die eine sich ausgehend von der Verzweigungsstelle allmählich verringernde Nuttiefe T aufweist. Der Steigungswinkel β der Rampe (der Winkel zwischen einer an den Nutgrund an der Verzweigungsstelle angelegten Tangentialebene und der Rampenfläche) beträgt etwa 20°, was zuverlässig zu einem Auswurf des Betätigungselements 50 in einen zugehörigen Nockensteller bewirkt (siehe Fig. 2c, die den Nutgrund in einer radialen Schnittebene zeigt, die durch den Ausweichweg verläuft). In der Seitenansicht der Fig. 2b ist die Rampe im Wesentlichen dreiecksförmig, wobei der Winkel zwischen den seitlichen Rändern der Rampe dem Winkel (α) zwischen den Eingriffsabschnitten 37, 38 ausgehend von der Verzweigungsstelle 36 entspricht, so dass die Rampe in ihrer Breite den gesamten Zwischenbereich zwischen den beiden Eingriffsabschnitten 37, 38 abdeckt.

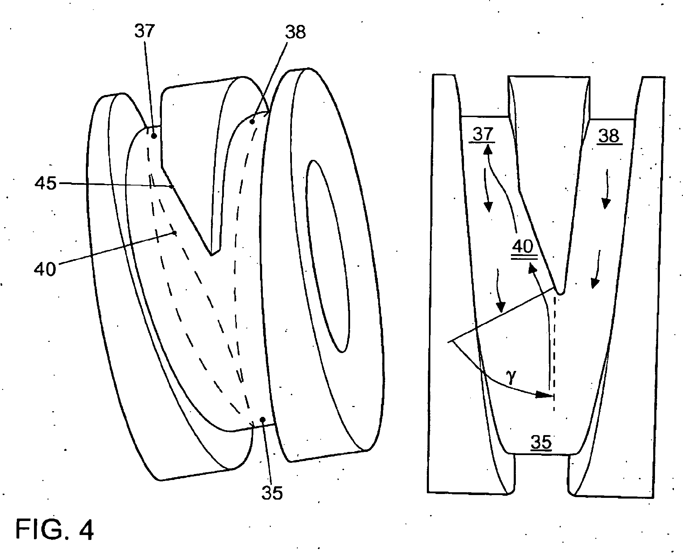

In Fig. 4 ist eine alternative Ausführungsform der Erfindung gezeigt. Dargestellt ist eine Axialkulisse 30 mit einem Ausweichweg 40, der ausgehend von der Verzweigungsstelle 35 in den Eingriffsabschnitt 37 der ersten Kulissenbahn 32 einmündet. Der Ausweichweg 40 bildet in Umfangsrichtung eine Fortsetzung des gemeinsamen Bahnabschnitts über die Verzweigungsstelle 35 hinaus. Mit anderen Worten wird die Bahn, die ein ausgehend von dem gemeinsamen Bahnabschnitt in Richtung auf die Verzeigungsstelle (also in "verkehrter" Richtung) geführtes Betätigungselement 50 durchläuft, an der Verzweigungsstelle nicht abrupt durch ein Hindernis wie eine Wand o. dgl. beendet, sondern die Bahn wird durch den Ausweichweg fortgeführt, der letztlich in den Eingriffsabschnitt 37 einmündet. Die Richtungen des ersten Teils des Ausweichwegs 40 und des letzten Teils des gemeinsamen Abschnitts 35 entsprechen einander im Wesentlichen. Anschließend kann der Ausweichweg 40 gekrümmt sein, so wie es in Fig. 4a dargestellt ist.

Dabei ist die Y-Kontur der Verzweigungsstelle 36 asymmetrisch geformt, wobei sich der Eingriffsabschnitt 37 in Richtung auf die Verzweigungsstelle 36 verbreitert, während die Breite des Eingriffsabschnitts 38 konstant bleibt. Dadurch wird das Betätigungselement 50 in die breite Mündung des Eingriffsabschnitts 37 eingeschert.

Der Einfallswinkel γ, unter dem das Betätigungselements 50 ausgehend von dem gemeinsamen Bahnabschnitt 35 auf eine Seitenwand 45 des asymmetrisch geformten Y-Zentrums trifft, ist dabei größer als 70°, so dass das Betätigungselement sanft in Richtung auf den Eingriffsabschnitt 37 umgelenkt wird.

Alternative Ausführungsformen der Erfindung sind gleichermaßen vorstellbar. So kann das Betätigungselement 50 bspw. durch eine feder- oder trägheitsgesteuerte Weiche an der Verzweigungsstelle in einen der Eingriffsabschnitt eingelenkt werden.

In Fig. 3 ist das an einem Trägerrohr der Nockenwelle 20 befestigte Nockenstück 22 mit Axialkulisse 30 dargestellt. Das Nockenstück 22 weist eine Nockengruppe 23 mit zwei axial aneinander angrenzenden Nocken mir unterschiedlichen Nockenhöhen auf. Die Axialkulisse 30 kann einstückig mit der Nockengruppe 23 gebildet sein oder in Form eines separaten Kulissenrads an der Trägerwelle der Nockenwelle befestigt sein. Die Befestigung an der Trägerwelle erfolgt vorzugsweise über ein thermisches Verfahren.

### Bezugszelchenliste

- 10: Vorrichtung zur Nockenwellenverstellung
- 20: Nockenwelle
- 22: Nockenstück
- 23: Nockengruppe
- 30: Axialkulisse/Kulissenrad
- 32, 34: Kulissenbahnen
- 35: gemeinsamer Abschnitt der Kulissenbahnen
- 36: Verzweigungsstelle
- 37, 38: Eingriffsabschnitt der Kulissenbahnen
- 40: Ausweichweg
- 42: Rampe
- 45: Seitenwand der Führungsnut
- 50: Betätigungselement
- 52: erster Verstellstift
- 54: zweiter Verstellstift
- 130: Axialkulisse
- 132, 134: Kulissenbahnen
- 135: gemeinsamer Abschnitt
- 136: Verzweigungsstelle
- 137, 138: Eingriffsabschnitte
- α: Winkel zwischen den Eingriffsabschnitten an der Verzweigungsstelle
- β: Steigungswinkel der Rampe
- γ: Einfallswinkel des Betätigungselements an der Seitenwand

## Patentansprüche

1. Vorrichtung zur Nockenwellenverstellung (10) einer Brennkraftmaschine mit einer Nockenwelle (20) mit mindestens einem drehfest daran angeordneten Nockenstück (22) und einer Axialkulisse (30) mit zwei Kulissenbahnen (32, 34) jeweils in Form einer in eine Umfangsfläche der Nockenwelle eingebrachten Steuernut, wobei die zwei Kulissenbahnen (32, 34) in einem gemeinsamen Bahnabschnitt (35) in Form und Verlauf zusammenfallen, der an einer Verzweigungsstelle (36) in zwei axial nebeneinander verlaufende Einkoppelabschnitte (37, 38) jeweils einer der beiden Kulissenbahnen übergeht, und mit mindestens einem radial zur Nockenwelle in die Axialkulisse einkoppelbaren Betätigungselement (50) zum Verschieben des Nockenstücks in axialer Richtung (A),
**dadurch gekennzeichnet,**
**dass** die Verzweigungsstelle derart eingerichtet ist, dass das bei Rückdrehung der Nockenwelle entgegen der vorgesehenen Drehrichtung ausgehend von dem gemeinsamen Bahnabschnitt (35) in Richtung auf die Verzeigungsstelle (36) geführte Betätigungselement (50) in einen Ausweichweg (40) einläuft, der eine Fortsetzung des gemeinsamen Bahnabschnitts über die Verzweigungsstelle hinaus bildet.

2. Vorrichtung nach Anspruch 1, **dadurch gekennzeichnet, dass** die beiden Einkoppelabschnitte (37, 38) und der gemeinsame Bahnabschnitt (35) an der Verzweigungsstelle Y-förmig zusammenlaufen, wobei die beiden Einkoppelabschnitte an der Verzweigungsstelle (36) gegenseitig einen spitzen Winkel (α) einschließen, bevorzugt einen Winkel von weniger als 20°, besonders bevorzugt weniger als 10°, insbesondere 5° oder weniger.

3. Vorrichtung nach Anspruch 1 oder 2, **dadurch gekennzeichnet, dass** der Ausweichweg (40) zwischen den Einkoppelabschnitten (37, 38) der beiden Kulissenbahnen verläuft.

4. Vorrichtung nach einem der vorhergehenden Ansprüche, **dadurch gekennzeichnet, dass** der Ausweichweg (40) in Form einer Rampe (42) gebildet ist, die eine sich ausgehend von der Verzweigungsstelle allmählich verringernde Nuttiefe (T) aufweist.

5. Vorrichtung nach Anspruch 4, **dadurch gekennzeichnet, dass** die Steigung der Rampe derart eingerichtet ist, dass das über die Rampe (42) geführte Betätigungselement bei Betrieb des Motors in radialer Richtung aus der Axialkulisse (30) ausgeworfen wird.

6. Vorrichtung nach Anspruch 4 oder 5, **dadurch gekennzeichnet, dass** der Steigungswinkel (β) der Rampe (42) gegenüber einer an den Nutgrund an der Verzweigungsstelle (36) angelegten Tangentialebene größer ist als 10° und kleiner ist als 30°, insbesondere etwa 20° beträgt.

7. Vorrichtung nach einem der vorhergehenden Ansprüche, **dadurch gekennzeichnet, dass** die beiden Kulissenbahnen (32, 34) im Wesentlichen symmetrisch um eine Radialebene als Spiegelebene verlaufen.

8. Vorrichtung nach einem der vorhergehenden Ansprüche, **dadurch gekennzeichnet, dass** der Ausweichweg (40) in einen der Eingriffsabschnitte (37) einmündet.

9. Vorrichtung nach Anspruch 8, **gekennzeichnet durch** einen Ausweichweg (40) mit einer feder- oder trägheitsgesteuerten Weiche, die das Betätigungselement in einen der Eingriffsabschnitte zurückspuren lässt.

10. Vorrichtung nach Anspruch 8 oder 9, **dadurch gekennzeichnet, dass** der Ausweichweg (40) derart eingerichtet ist, dass das in den Ausweichweg einlaufende Betätigungselement unter einem Einfallswinkel (γ) von mehr als 70°, insbesondere mehr als 80° und weniger als 88° auf einen Wandabschnitt (45) der Führungsnut trifft und dadurch in einen der Eingriffsabschnitte (37) eingeschert wird.

11. Vorrichtung nach einem der Ansprüche 8 bis 10, **dadurch gekennzeichnet, dass** die Verzweigungsstelle derart asymmetrisch geformt ist, dass eine durch die axiale Mitte (M) des gemeinsamen Bahnabschnitts (35) verlaufende Radialebene die Seitenwand (45) genau eines Einkoppelabschnitts (37) schneidet.

12. Vorrichtung nach einem der Ansprüche 8 bis 11, **dadurch gekennzeichnet, dass** sich einer der Einkoppelabschnitte (37) zu der Verzweigungsstelle (36) hin verbreitert.

13. Vorrichtung nach einem der vorhergehenden Ansprüche, **dadurch gekennzeichnet, dass** das Nockenstück (22) mindestens eine Nockengruppe (23) mit mindestens zwei in axialer Richtung nebeneinander angeordneten Nocken aufweist.

14. Vorrichtung nach einem der vorhergehenden Ansprüche, **dadurch gekennzeichnet, dass** das Betätigungselement (50) ein in radialer Richtung vorstehender Verstellstift ist, dessen Durchmesser an die Breite der beiden Führungsnuten (32, 24) angepasst ist.

15. Vorrichtung nach einem der vorhergehenden Ansprüche, **dadurch gekennzeichnet, dass** zwei im Wesentlichen gleich geformte Betätigungselemente (52, 54) vorgesehen sind, von denen das erste (52) zur axialen Verschiebung des Nockenstücks in Vorwärtsrichtung durch Eingriff in einen der Einkoppelabschnitte (37) eingerichtet ist und von denen das andere (54) zur axialen Verschiebung des Nockenstücks in Rückwärtsrichtung durch Eingriff in den anderen der Einkoppelabschnitte (38) eingerichtet ist.

16. Vorrichtung nach einem der vorhergehenden Ansprüche, **dadurch gekennzeichnet, dass** das Nockenstück (22) auf einer strukturell von diesem getrennten Trägerwelle axial verschieblich gelagert ist.

17. Brennkraftmaschine mit einer Vorrichtung nach einem der vorhergehenden Ansprüche.

18. Axialkulisse einer Vorrichtung nach einem der Ansprüche 1 bis 16.

## Claims

1. Apparatus for camshaft adjustment (10) of an internal combustion engine having a camshaft (20) with at least one cam piece (22) which is arranged fixedly thereon so as to rotate with it, and an axial slotted guide (30) with two slotted guide tracks (32, 34) in each case in the form of a control groove which is made in the circumferential face of the camshaft, the two slotted guide tracks (32, 34) coinciding in terms of shape and course in a common track section (35) which merges at a branching point (36) into two coupling-in sections (37, 38), which run axially next to one another, of in each case one of the two slotted guide tracks, and having at least one actuating element (50) which can be coupled into the axial slotted guide radially with respect to the camshaft for displacing the cam piece in the axial direction (A), **characterized in that** the branching point is set up in such a way that the actuating element (50) which is guided during a reverse rotation of the camshaft counter to the provided rotational direction, starting from the common track section (35), in the direction of the branching point (36) runs into a yielding path (40) which forms a continuation of the common track section beyond the branching point.

2. Apparatus according to Claim 1, **characterized in that** the two coupling-in sections (37, 38) and the common track section (35) run together in a Y-shape at the branching point, the two coupling-in sections mutually enclosing an acute angle (α) at the branching point (36), preferably an angle of less than 20°, particularly preferably less than 10°, in particular 5° or less.

3. Apparatus according to Claim 1 or 2, **characterized in that** the yielding path (40) runs between the coupling-in sections (37, 38) of the two slotted guide tracks.

4. Apparatus according to one of the preceding claims, **characterized in that** the yielding path (40) is formed in the shape of a ramp (42) which has a groove depth (T) which decreases gradually starting from the branching point.

5. Apparatus according to Claim 4, **characterized in that** the gradient of the ramp is set up in such a way that the actuating element which is guided over the ramp (42) is ejected out of the axial slotted guide (30) in the radial direction during operation of the motor.

6. Apparatus according to Claim 4 or 5, **characterized in that** the gradient angle (β) of the ramp (42) with respect to a tangential plane which is applied to the groove bottom at the branching point (36) is greater than 10° and less than 30°, in particular is approximately 20°.

7. Apparatus according to one of the preceding claims, **characterized in that** the two slotted guide tracks (32, 34) run substantially symmetrically about a radial plane as mirror plane.

8. Apparatus according to one of the preceding claims, **characterized in that** the yielding path (40) opens into one of the engagement sections (37).

9. Apparatus according to Claim 8, **characterized by** a yielding path (40) with a diverter which is controlled by spring or inertia and allows the actuating element to engage back into one of the engagement sections.

10. Apparatus according to Claim 8 or 9, **characterized in that** the yielding path (40) is set up in such a way that the actuating element which runs into the yielding path comes into contact with a wall section (45) of the guide groove at an angle of incidence (γ) of more than 70°, in particular more than 80° and less than 88°, and is moved into one of the engagement sections (37) as a result.

11. Apparatus according to one of Claims 8 to 10, **characterized in that** the branching point is shaped asymmetrically in such a way that a radial plane which runs through the axial centre (M) of the common track section (35) intersects the side wall (45) of precisely one coupling-in section (37).

12. Apparatus according to one of Claims 8 to 11, **characterized in that** one of the coupling-in sections (37) widens towards the branching point (36).

13. Apparatus according to one of the preceding claims, **characterized in that** the cam piece (22) has at least one cam group (23) with at least two cams which are arranged next to one another in the axial direction.

14. Apparatus according to one of the preceding claims, **characterized in that** the actuating element (50) is an adjusting pin which projects in the radial direction and the diameter of which is adapted to the width of the two guide grooves (32, 24).

15. Apparatus according to one of the preceding claims, **characterized in that** two actuating elements (52, 54) which are shaped substantially identical are provided, of which the first (52) is set up for the axial displacement of the cam piece in the forward direction by way of engagement into one of the coupling-in sections (37), and of which the other (54) is set up for the axial displacement of the cam piece in the reverse direction by way of engagement into the other of the coupling-in sections (38).

16. Apparatus according to one of the preceding claims, **characterized in that** the cam piece (22) is mounted in an axially displaceable manner on a support shaft which is structurally separate from it.

17. Internal combustion engine having an apparatus according to one of the preceding claims.

18. Axial slotted guide of an apparatus according to one of Claims 1 to 16.

## Revendications

1. Dispositif de réglage d'arbre à cames (10) d'un moteur à combustion interne comprenant un arbre à cames (20) avec au moins un jeu de cames (22) disposé de manière solidaire en rotation sur celui-ci et une coulisse axiale (30) avec deux pistes de coulisse (32, 34) respectivement sous la forme d'une rainure de commande réalisée dans une surface périphérique de l'arbre à cames, les deux pistes de coulisse (32, 34) coïncidant dans une portion de piste commune (35) en termes de forme et d'allure, laquelle portion de piste commune se prolonge au niveau d'une zone de ramification (36) en deux portions d'accouplement (37, 38) s'étendant axialement l'une à côté de l'autre de l'une respective des deux pistes de coulisse, et comprenant au moins un élément d'actionnement (50) pouvant être accouplé radialement à l'arbre à cames dans la coulisse axiale, pour le déplacement du jeu de cames dans la direction axiale (A), **caractérisé en ce que**
la zone de ramification est réalisée de telle sorte que l'élément d'actionnement (50) guidé lors de la rotation en sens inverse de l'arbre à cames à l'encontre du sens de rotation prévu à partir de la portion de piste commune (35) dans la direction de la zone de ramification (36) pénètre dans une voie d'écartement (40) qui forme un prolongement de la portion de piste commune au-delà de la zone de ramification.

2. Dispositif selon la revendication 1, **caractérisé en ce que** les deux portions d'accouplement (37, 38) et la portion de piste commune (35) coïncident au niveau de la zone de ramification en forme de Y, les deux portions d'accouplement formant au niveau de la zone de ramification (36) l'une avec l'autre un angle aigu (α), de préférence un angle inférieur à 20°, particulièrement préférablement inférieur à 10°, notamment de 5° ou moins.

3. Dispositif selon la revendication 1 ou 2, **caractérisé en ce que** la voie d'écartement (40) s'étend entre les portions d'accouplement (37, 38) des deux pistes de coulisse.

4. Dispositif selon l'une quelconque des revendications précédentes, **caractérisé en ce que** la voix d'écartement (40) est formée sous forme de rampe (42) qui présente une profondeur de rainure (T) diminuant progressivement à partir de la zone de ramification.

5. Dispositif selon la revendication 4, **caractérisé en ce que** la pente de la rampe est réalisée de telle sorte que l'élément d'actionnement guidé sur la rampe (42) soit éjecté dans la direction radiale hors de la coulisse axiale (30) lors du fonctionnement du moteur.

6. Dispositif selon la revendication 4 ou 5, **caractérisé en ce que** l'angle de pente (β) de la rampe (42) par rapport à un plan tangentiel appliqué au fond de rainure au niveau de la zone de ramification (36) est supérieur à 10° et inférieur à 30°, en particulier vaut environ 20°.

7. Dispositif selon l'une quelconque des revendications précédentes, **caractérisé en ce que** les deux pistes de coulisse (32, 34) s'étendent essentiellement symétriquement autour d'un plan radial réalisé sous forme de plan miroir.

8. Dispositif selon l'une quelconque des revendications précédentes, **caractérisé en ce que** la voie d'écartement (40) débouche dans l'une des portions d'engagement (37).

9. Dispositif selon la revendication 8, **caractérisé par** une voie d'écartement (40) avec un aiguillage commandé par ressort ou par inertie, qui permet de rediriger l'élément d'actionnement dans l'une des portions d'engagement.

10. Dispositif selon la revendication 8 ou 9, **caractérisé en ce que** la voie d'écartement (40) est réalisée de telle sorte que l'élément d'actionnement entrant dans la voie d'écartement vienne en contact avec une portion de paroi (45) de la rainure de guidage suivant un angle d'incidence (γ) de plus de 70°, en particulier de plus de 80° et de moins de 88° et soit de ce fait rabattu dans l'une des portions d'engagement (37).

11. Dispositif selon l'une quelconque des revendications 8 à 10, **caractérisé en ce que** la zone de ramification est formée de manière asymétrique de telle sorte qu'un plan radial s'étendant à travers le centre axial (M) de la portion de piste commune (35) coupe la paroi latérale (45) d'exactement une portion d'accouplement (37).

12. Dispositif selon l'une quelconque des revendications 8 à 11, **caractérisé en ce que** l'une des portions d'accouplement (37) s'élargit vers la zone de ramification (36).

13. Dispositif selon l'une quelconque des revendications précédentes, **caractérisé en ce que** le jeu de cames (22) présente au moins un groupe de cames (23) avec au moins deux cames disposées l'une à côté de l'autre dans la direction axiale.

14. Dispositif selon l'une quelconque des revendications précédentes, **caractérisé en ce que** l'élément d'actionnement (50) est une goupille de réglage faisant saillie dans la direction radiale, dont le diamètre est adapté à la largeur des deux rainures de guidage (32, 24).

15. Dispositif selon l'une quelconque des revendications précédentes, **caractérisé en ce que** deux éléments d'actionnement (52, 54) de forme essentiellement identique sont prévus, le premier (52) étant prévu pour le déplacement axial du jeu de cames dans la direction vers l'avant par engagement dans l'une des portions d'accouplement (37) et l'autre (54) étant prévu pour le déplacement axial du jeu de cames dans la direction vers l'arrière par engagement dans l'autre des portions d'accouplement (38).

16. Dispositif selon l'une quelconque des revendications précédentes, **caractérisé en ce que** le jeu de cames (22) est supporté de manière déplaçable axialement sur un arbre de support séparé structurellement de celui-ci.

17. Moteur à combustion interne comprenant un dispositif selon l'une quelconque des revendications précédentes.

18. Coulisse axiale d'un dispositif selon l'une quelconque des revendications 1 à 16.
